**Europäisches Patentamt**

**European Patent Office**

**Office européen des brevets**

(11) Numéro de publication: **0 164 280**
A2

# (12) DEMANDE DE BREVET EUROPEEN

(21) Numéro de dépôt: **85400749.9**

(22) Date de dépôt: **16.04.85**

(51) Int. Cl.⁴: **E 04 C 2/40,** E 04 C 2/24, B 32 B 21/08, B 29 C 67/20

(30) Priorité: **16.04.84 FR 8405966**

(43) Date de publication de la demande: **11.12.85 Bulletin 85/50**

(84) Etats contractants désignés: **AT BE CH DE FR GB IT LI LU NL SE**

(71) Demandeur: **Mc Intosh, Jonathan Christopher, 3, rue Félix Ziem, F-75018 Paris (FR)**
Demandeur: **Soria, Jean Yves Antoine, 13, rue de la Fraternité, F-93130 Noisy le Sec (FR)**
Demandeur: **Van Willigen, Willem Arnold, 3, rue Félix Ziem, F-75018 Paris (FR)**

(72) Inventeur: **Mc Intosh, Jonathan Christopher, 3, rue Félix Ziem, F-75018 Paris (FR)**
Inventeur: **Soria, Jean Yves Antoine, 13, rue de la Fraternité, F-93130 Noisy le Sec (FR)**
Inventeur: **Van Willigen, Willem Arnold, 3, rue Félix Ziem, F-75018 Paris (FR)**

(74) Mandataire: **Nony, Michel, Cabinet Nony 29, rue Cambacérès, F-75008 Paris (FR)**

(54) **Eléments composites de construction développables et procédé pour la réalisation de structures multi-dimensionnelles par formage et/ou assemblage de tels éléments.**

(57) L'invention est relative à un élément composite du type comportant de part et d'autre d'une âme en polystyrène expansé ou extrudé, des couches externes en contreplaqué adhérisées sur ladite âme en polystyrène.

L'épaisseur de chacune des couches externes en contreplaqué (1-2) est comprise entre environ 2 et environ 10% de l'épaisseur de l'âme en polystyrène (3).

EP 0 164 280 A2

0164280

1

Eléments composites de construction développables et procédé pour la réalisation de structures multi-dimensionnelles par formage et/ou assemblage de tels éléments.

La présente invention est relative à des éléments composites de construction développables du type comportant, de part et d'autre d'une âme en mousse de polystyrène expansé ou extrudé, des couches externes en contreplaqué adhérisées sur ladite âme en polystyrène.

On utilise de tels éléments sous forme de panneaux rigides, notamment dans le domaine de la construction, pour assurer des fonctions d'isolation en particulier de toitures de bâtiment.

Les panneaux de ce type présentent des couches externes en contre plaqué d'une épaisseur relativement importante par rapport à l'âme en polystyrène et de ce fait sont lourds et coûteux.

La présente invention se propose de réaliser des éléments composites de construction développables qui tout en étant plus légers et plus économiques que les éléments composites du type mentionné ci-dessus présentent de manière tout à fait surprenante des qualités mécaniques, notamment de rigidité, au moins égales à celles des éléments traditionnels, et se prêtent en outre, contrairement aux éléments traditionnels à la réalisation de structures multi-dimensionnelles par formage et/ou assemblage, les structures développables obtenues présentant de plus des qualités mécaniques du même ordre que les éléments composites servant à les réaliser.

Les éléments composites selon la présente invention se caractérisent par le fait que l'épaisseur de chacune des couches externes en contreplaqué est comprise entre environ 2 et environ 10 % de l'épaisseur de l'âme en polystyrène.

De préférence, l'épaisseur de chacune des couches externes est d'environ 5% de l'épaisseur de l'âme en polystyrène.

Dans le cadre de l'invention, l'âme de l'élément composite peut être constituée en mousse de polystyrène expansé ou extrudé présentant un poids spécifique compris entre environ 15 et environ 50 kilos par m3.

L'adhérisation des couches externes en contreplaqué sur l'âme en polystyrène est effectuée par collage, notamment à l'aide d'une colle structurale polyuréthane à un ou plusieurs composants assurant un degré de collage supérieur à la résistance au cisaillement du polystyrène.

Selon les applications envisagées, les éléments composites développables selon l'invention peuvent être réalisés notamment sous forme de plaques, planches, poutres ou blocs, et pour certaines applications, les chants de l'élément peuvent être, de même que les faces principales de AL/JD/AA - CDE 69865 l'élément, revêtue d'une couche de contreplaqué adhérisée sur l'âme en polystyrène, l'épaisseur de la couche externe en contreplaqué au niveau des chants étant de préférence la même qu'au niveau des faces principales.

La présente invention est également relative à un procédé pour la réalisation de structures multi-dimensionnelles à partir d'éléments composites du type décrit précédemment par formage et/ou assemblage de tels éléments.

Les déposants ont en effet découvert de façon remarquable que de tels éléments composites développables pouvaient par des moyens particulièrement simples et économiques être conformés et/ou assemblés pour réaliser des structures multi-dimensionnelles, le ou les éléments présentant dans la structure des caractéristiques mécaniques, notamment de rigidité et de solidité qui sont remarquables.

Un premier mode de mise en oeuvre selon l'invention est caractérisé par le fait que l'on réalise dans un élément composite tel que défini précédemment une pluralité de découpes à partir d'une face principale de celui-ci sur la majeure partie de son épaisseur, et que l'on communique audit élément la forme désirée par déformation de celui-ci dans la zone desdites découpes, après quoi on immobilise l'élément dans la configuration choisie, par mise en place dans lesdites découpes d'une colle structurale, de préférence à base de polyuréthane, à un ou plusieurs composants qui reconstitue la continuité de la couche de contreplaqué dans la face de l'élément composite qui a subi les découpes précitées.

Dans une variante de ce mode de mise en oeuvre, on réalise les découpes dans l'âme en polystyrène d'un élément de départ qui ne comporte une couche de contreplaqué que sur la face de l'âme en polystyrène qui ne reçoit pas les découpes, l'on courbe cet élément de départ pour lui donner la forme développable désirée et l'on applique alors la deuxième couche continue de contreplaqué sur la face principale de l'élément qui n'en comportait pas initialement.

Dans un second mode de mise en oeuvre de l'invention, on utilise deux éléments de départ ne comportant qu'une âme en polystyrène et une couche de contreplaqué et après avoir enduit d'une couche d'adhésif appropriée, de préférence polymérisable, les surfaces libres des âmes en polystyrène des deux éléments, on applique ces derniers l'un contre l'autre, les couches de contreplaqué étant à l'extérieur, en leur donnant la forme développable que l'on désire obtenir pour l'élément final. Il suffit alors de les maintenir dans cette position jusqu'à une prise suffisante de l'adhésif.

On voit que grâce à l'invention, il est possible de conformer facilement les éléments selon n'importe quelle surface développable.

AL/JD/AA - CDE 69865

Conformément à l'invention, les découpes sont avantageusement réalisées depuis une face principale de l'élément à travers l'âme de celui-ci jusqu'au voisinage de la couche externe opposée de contreplaqué, ces découpes présentant une section en V se rétrécissant en direction de ladite face opposée.

Les découpes peuvent être réalisées perpendiculaires aux chants de l'élément ou inclinées en biais par rapport à ceux-ci.

Dans un autre mode de réalisation dans lequel on désire réaliser une courbure de l'élément tout en conservant des faces externes principales planes, parallèles, les découpes sont avantageusement réalisées également de préférence avec une section en forme de V à partir d'un chant de l'élément jusqu'au voisinage du chant opposé, et ce sur toute l'épaisseur de l'élément.

Dans un autre mode de réalisation on réalise sur l'élément à partir d'une face principale un réseau de découpes croisées, de préférence ondulées, qui permettent ultérieurement de courber ledit élément en fonction des besoins.

L'invention a également pour objet des éléments composites tels que définis précédemment présentant une pluralité de découpes permettant la réalisation de structures multidirectionnelles par conformation et/ou assemblage dans le cadre de la mise en oeuvre du procédé de l'invention.

Selon un premier mode de mise en oeuvre de l'invention, lorsque l'on désire réaliser des structures multi-dimensionnelles par assemblage d'éléments composites selon l'invention, on réalise dans un premier élément à partir d'une face principale et jusqu'au niveau de la face opposée deux découpes parallèles dont la largeur correspond à l'épaisseur de paroi de contreplaqué d'un second élément à assembler au premier et dont l'écartement correspond à l'épaisseur de l'âme dudit second élément ; on retire l'âme de polystyrène du second élément sur une hauteur correspondant à la hauteur des découpes dans le premier élément, puis on encastre les extrémités des faces externes du second élément à assembler dans les découpes du premier élément le collage des éléments en position assemblée étant assuré par mise en place d'une colle structurale dans lesdites découpes.

Selon un second mode de mise en oeuvre de l'invention, on assemble bord à bord deux éléments, en substituant à un certain volume de polystyrène situé le long des rives des deux éléments à assembler, un organe de liaison, par exemple en bois, qui assure un pontage entre les deux éléments et qui est réuni, par collage clouage ou agrafage par exemple, à une couche de contreplaqué de chacun des deux éléments.

Ces organes de liaison peuvent être par exemple des baguettes plates situées juste en dessous des couches de contreplaqué des deux éléments AL/JD/AA - CDE 69865

0164280

4

à réunir ou des blocs faisant toute l'épaisseur de l'âme en polystyrène et qui s'encastre entre les couches de contreplaqué dans les chants des éléments à réunir.

Les organes de liaison qui constituent également des renforts de la structure peuvent être contenus ou discontinus. Ils peuvent également constituer des "clés" qui assurent un assemblage correct des différents éléments.

Il est bien entendu possible dans le cadre de l'invention d'assembler par le procédé qui vient d'être décrit de nombreux éléments composites entre eux, après les avoir le cas échéant conformés comme décrit précédemment.

On peut ainsi selon l'invention réaliser des structures tridimensionnelles constituées d'éléments plans, assemblés et/ou d'éléments courbes présentant des surfaces développables, lesdites structures étant utilisables dans de nombreux domaines de l'industrie.

A titre d'applications particulières, nullement limitatives, on peut citer la réalisation d'éléments de structure dans le bâtiment et le génie civil, la réalisation d'éléments de coques dans la construction navale ou de châssis-coques dans la construction automobile. Les éléments selon l'invention peuvent également trouver une application dans le domaine de l'ameublement ou dans celui de la chaudronnerie légère pour notamment réaliser des réservoirs ou des citernes.

Selon les applications, les faces externes des éléments formant les structures peuvent être revêtues de composants de recouvrement appropriés tels que par exemple des polymères armés et/ou chargés en particulier des polyesters ou des résines époxy, ou encore notamment dans le bâtiment, des enduits de recouvrement en acier/ciment.

Dans le but de mieux faire comprendre l'invention, on va maintenant en décrire à titre d'exemples non limitatifs différents modes de réalisation en se référant au dessin annexé dans lequel :

La figure 1 illustre de manière fragmentaire un élément composite servant de base à l'invention.

Les figures 2 à 4 illustrent le formage d'un élément composite selon l'invention sous forme de planche ou de poutre.

Les figures 5 et 6 illustrent schématiquement une autre possibilité de formage d'un élément composite selon l'invention.

La figure 7 illustre un élément composite selon l'invention sous forme de planche pourvue d'un premier mode de réalisation de découpes pour le formage.

La figure 8 illustre l'élément de la figure 7 après formage.

AL/JD/AA - CDE 69865

La figure 9 illustre un élément composite selon l'invention prêt à être conformé selon un autre mode de réalisation de l'invention.

Les figures 10 et 11 illustrent deux possibilités de formage de l'élément illustré à la figure 9.

Les figures 12 et 13 illustrent le formage d'un élément en utilisant un autre mode de mise en oeuvre de l'invention.

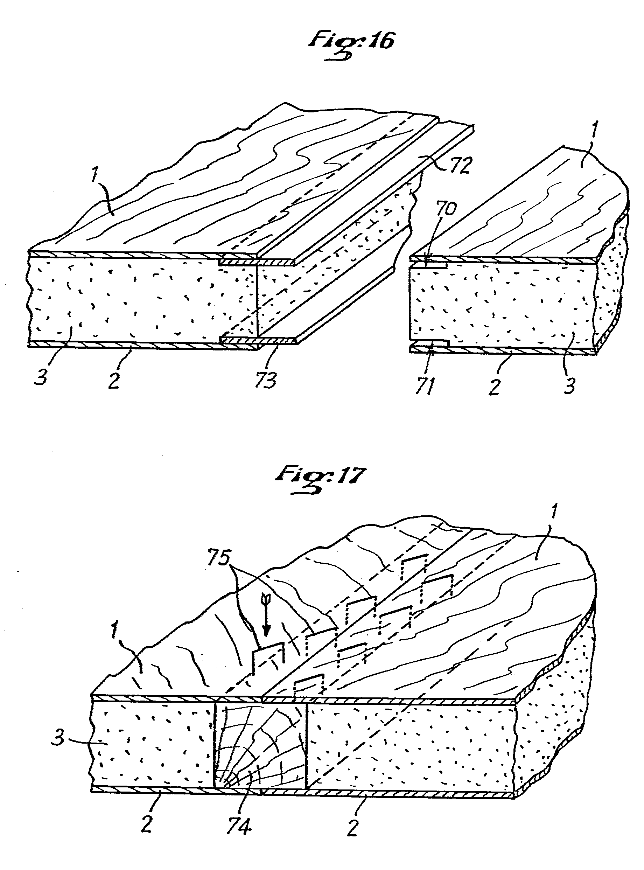

La figure 14 illustre deux éléments selon l'invention prêts à être assemblés,

La figure 15 illustre deux éléments selon l'invention après assemblage et,

Les figures 16 et 17 illustrent deux modes d'assemblage bord à bord d'éléments selon l'invention.

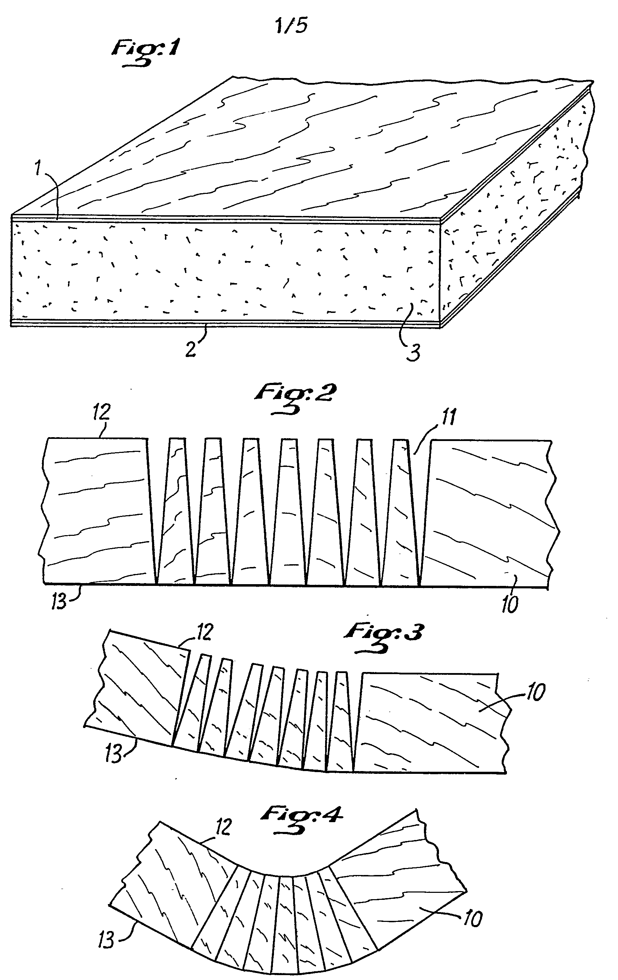

L'élément composite selon la figure 1 comprend une couche externe supérieure 1 et une couche externe inférieure 2 réalisées toutes deux en contreplaqué d'une épaisseur par exemple de 3mm.

Entre ces couches externes 1 et 2 constituant les peaux de l'élément est adhérisée une âme en polystyrène 3.

On peut ainsi réaliser des éléments composites sous forme de panneaux ou de planches qui se caractérisent par d'excellentes propriétés mécaniques notamment de rigidité.

On se réfère maintenant aux figures 2 à 4 qui illustrent un exemple de formage d'un élément selon l'invention de manière à conserver des faces principales planes, lesquelles sont vues sur ces figures.

On réalise selon l'invention dans la zone voulue de déformation une pluralité de découpes 11 s'étendant sur toute l'épaisseur de l'élément 10 depuis le chant 12 jusqu'au voisinage du chant opposé 13 sans atteindre celui-ci.

Dans le cas où, l'élément illustré aux figures 2 à 4 est par exemple une poutre, les chants et, en particulier le chant 13, comportent une couche externe de contreplaqué présentant de préférence la même épaisseur, par exemple de l'ordre de 3mm que les couches externes 10.

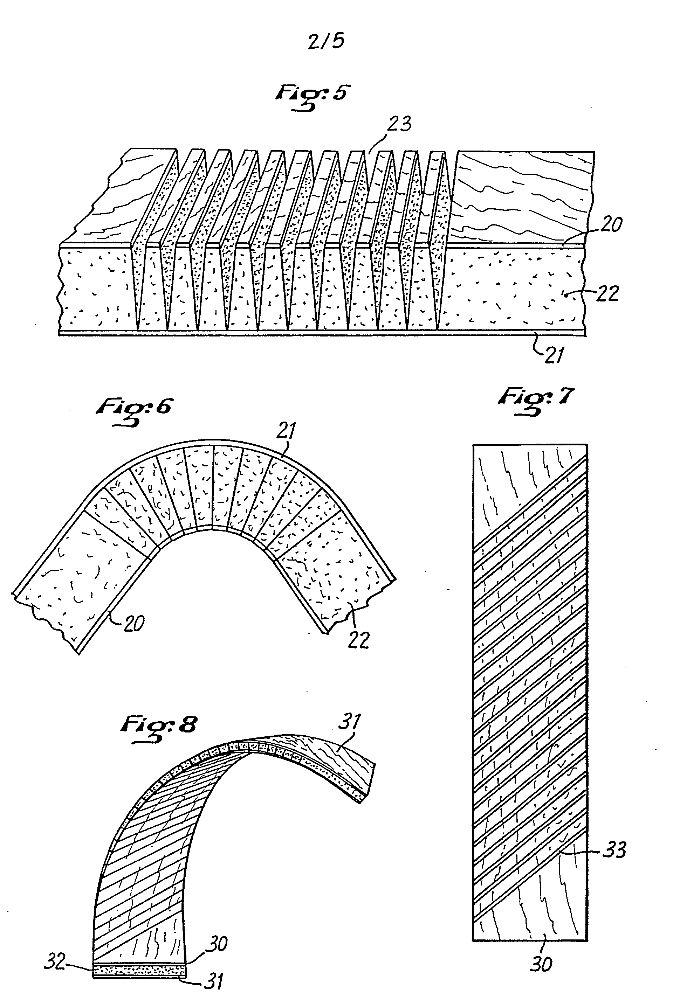

Les découpes 11 sont réalisées en forme de fentes sensiblement en V depuis le chant 12 en se rétrécissant vers le chant 13 de façon à permettre de réaliser après fermeture des découpes la conformation courbe illustrée à la figure 4.

A partir de la position illustrée à la figure 3 on met en place dans les découpes une colle structurale notamment du type polyuréthane qui, après séchage, assure le maintien d'éléments en reconstituant la continuité de la couche de contreplaqué des chants 12.

AL/JD/AA - CDE 69865

Dans le mode de réalisation illustré aux figures 5 et 6 on réalise le formage de l'élément en communiquant une courbure aux faces externes 20, 21 de l'élément entre lesquelles est adhérisée la couche de polystyrène 22.

Les découpes 23 présentent une forme analogue aux découpes 11 du mode de réalisation précédent et s'étendent depuis une face principale 20 jusqu'au voisinage de la face opposée 21 au travers de toute l'épaisseur de l'âme en polystyrène 22 sans entamer la couche de contreplaqué 21 qui à l'état formé, c'est-à-dire après conformation et collage constitue une peau externe continue pour l'élément. La fixation s'effectue par collage comme dans le cas précédent.

Dans le mode de réalisation des figures 7 et 8 on a réalisé dans un élément selon l'invention sous forme de planche comportant des couches externes en contreplaqué 30 et 31 et une âme en polystyrène 32, une pluralité de fentes parallèles 33 s'étendant entre les chants de l'élément à partir de la face externe de la couche 30 jusqu'au voisinage de la couche de contreplaqué opposée 31 sans cependant entamer celle-ci.

La face externe de la couche 31 constitue là encore après conformation comme on le voit sur la figure 8, une peau continue.

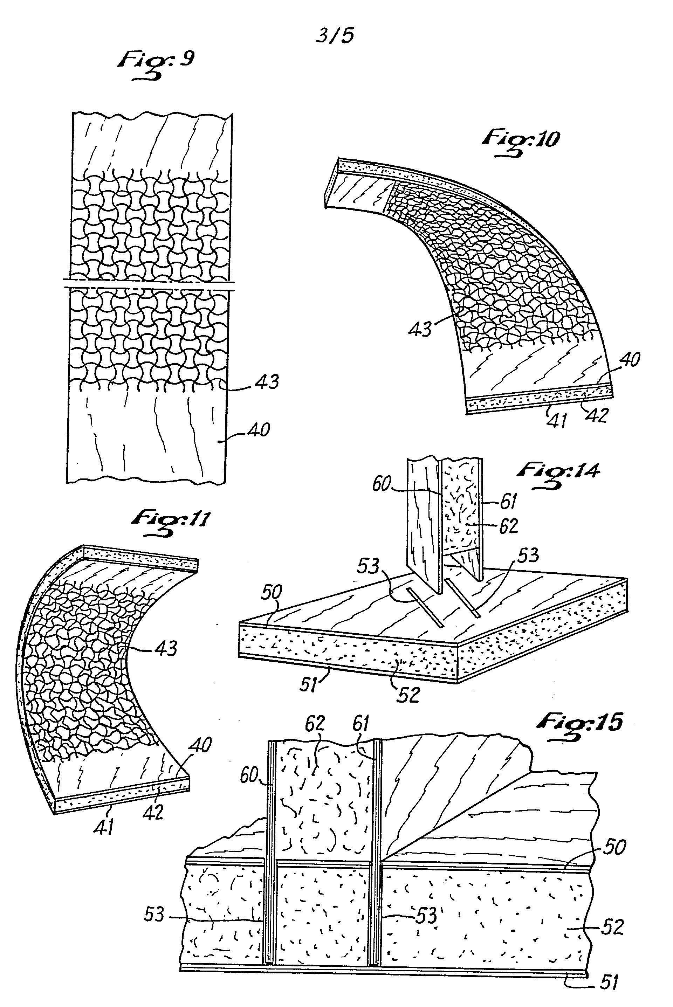

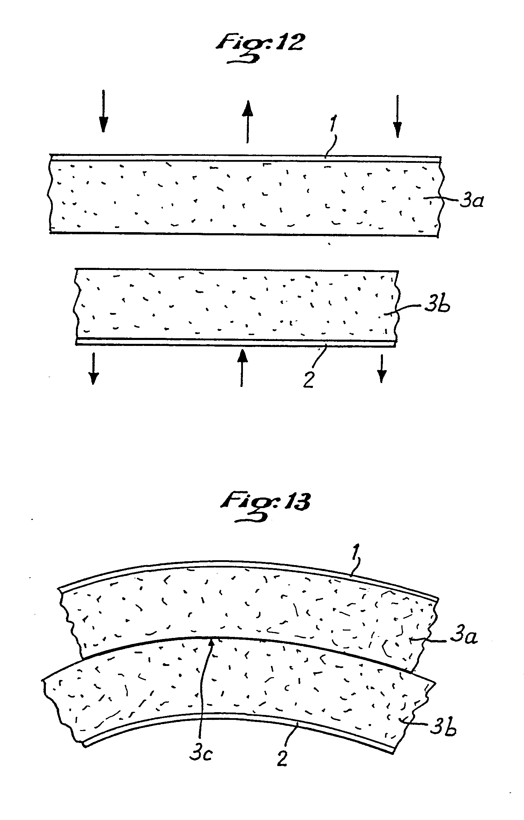

L'élément, également sous forme de planche, illustré avant formage à la figure 9 et selon deux conformations tridimensionnelles dans les figures 10 et 11 est également constitué de couches externes de contreplaqué 40 et 41 entre lesquelles est adhérisée une âme en polystyrène 42. Comme on le voit sur la figure 9 on a réalisé à partir de la couche 40 et sur toute l'épaisseur de l'âme 42 jusqu'au voisinage de la couche externe opposée 41 un réseau de découpes croisées, de forme sensiblement ondulée, réalisant en quelque sorte un pavage sur l'élément et rendant celui-ci apte à de nombreux types de déformations dont deux sont illustrées aux figures 10 et 11.

Dans les modes de réalisation des figures 7 à 10, la fixation s'effectue également par collage.

Dans une variante des modes de réalisation des figures 2 à 10, on part d'un élément identique à celui de la figure 1, mais qui ne comporte pas de couche de contreplaqué sur la face à partir de laquelle, on réalise les découpes 11, 23, 33 et 43. Après avoir déformé cet élément pour lui donner la forme d'une surface développable, il suffit pour le fixer de coller sur l'âme en polystyrène la deuxième couche de contreplaqué.

Dans le mode de réalisation des figures 12 et 13, l'on part de deux éléments de base constitués chacun par une demi-âme 3a et 3b en polystyrène et par une couche de contreplaqué 1 et 2. Après qu'une couche d'adhésif ayant une force de collage supérieure à la résistance au cisaillement du polystyrène, a été appliqué entre les demi-âmes 3a et 3b ou puisse l'un

0164280

7

contre l'autre les deux éléments de base en les mettant en forme comme représenté sur la figure 13.

On comprend qu'avec les possibilités de formage décrites, qui en fait ne constituent que des exemples particuliers de réalisation on peut réaliser à partir des éléments composites selon l'invention de nombreux types de structures multi-dimensionnelles dont les caractéristiques peuvent être déterminées avec une grande précision.

Les figures 12 et 13 illustrent la réalisation selon l'invention,de structures tridimensionnelles par un premier type d'assemblage de deux éléments, ces éléments pouvant être conformés comme décrit précédemment.

Dans un premier élément constitué de couches externes 50, 51 en contreplaqué et d'une âme en polystyrène 52 on réalise des découpes parallèles sous forme de fentes 53 s'étendant depuis la face externe de la couche 50 jusqu'au voisinage de la couche externe opposée 51 sur toute l'épaisseur de l'âme en polystyrène 52. Les découpes n'entament pas la couche inférieure 51.

Un second élément constitué également de deux couches externes en contreplaqué 60 et 61 et d'une âme en polystyrène 62 est évidé comme on le voit sur la figure 12 sur une partie de sa longueur de son âme en polystyrène à partir des extrémités destinées à être engagées dans les fentes 53. Dans la position assemblée, et après collage avec une colle structurale telle que du polyuréthane, on obtient un assemblage à encastrement particulièrement résistant des deux éléments avec une excellente continuité des peaux externes définies par les couches externes en contreplaqué des éléments.

Les figures 16 et 17 représentent comment il est possible de réunir bord à bord deux éléments conformément à l'invention.

Dans le mode de réalisation de la figure 16, on réalise le long des bords des éléments qui doivent être réunis et au voisinage des couches de contreplaqué 1 et 2, des éléments 70 et 71 dans l'âme de polystyrène 3.

Ces évidements 70 et 71 correspondent au volume des baguettes plates 72, 73, par exemple en contreplaqué, qui servent à réunir les deux éléments.

Dans le mode de réalisation de la figure 16, on a représenté les baguettes 72, 73 engagées dans les évidements de l'élément de gauche. Pour réaliser l'assemblage, il suffit de rapprocher les deux éléments pour engager les bords droits des baguettes 72, 73 dans les évidements correspondants 70, 71 de l'élément de droite.

La fixation des deux éléments peut être réalisée par exemple par collage ou par agrafage comme cela serait décrit ci-après au sujet de la figure 17.

AL/JD/AA — CDE 69865

La figure 17 illustre une variante dans laquelle l'organe de liaison 74 est constitué par un montant en bois dont l'épaisseur correspond à l'épaisseur de l'âme 3. Cet organe de liaison 74 peut s'encastrer à l'intérieur d'évidements réalisés sur les chants des éléments entre les couches de contreplaqué 1 et 2.

La figure 17 représente deux éléments assemblés conformément à l'invention. La fixation de l'assemblage peut être réalisée par exemple en engageant des agrafes 75 qui traversent les couches de contreplaqué et s'engagent dans l'organe de liaison 74.

Un tel mode d'assemblage par agrafe peut être également réalisé dans le mode de réalisation de la figure 16.

Conformément à l'invention, lorsque l'on veut réaliser un assemblage démontable, il suffit par exemple de coller à l'emplacement des agrafes, un ruban adhésif renforcé de préférence de fibres continues puis de fixer les agrafes au-dessus du ruban adhésif.

Dans ces conditions, pour procéder au démontage il suffit de décoller le ruban adhésif, les agrafes étant arrachées avec lui. Si l'on désire une surface plus nette, il suffit de coller un autre ruban adhésif sur les agrafes qui ont été préalablement enfoncées.

Bien que l'invention ait été décrite en laison avec des modes de réalisation particuliers il est bien évident qu'elle n'y est nullement limitée et que l'on peut lui apporter de nombreuses variantes et modifications sans pour autant sortir ni de son cadre ni de son esprit.

C'est ainsi en particulier, que bien que les feuilles de contreplaqué et la mousse de polystyrène qui ont été définies ci-dessus sont des matériaux particulièrement bien appropriés à la mise en oeuvre de l'invention, il est clair qu'il est également possible d'utiliser d'autres matériaux qui présentent les mêmes caractéristiques.

On comprend également que selon l'invention on peut assembler sur un même élément une pluralité d'autres éléments de même type ou de types différents.

REVENDICATIONS

1. Procédé de fabrication d'éléments composites développables destiné à la réalisation de structures tridimensionnelles, caractérisé par le fait que dans un élément composite plan comportant une âme en mousse de polystyrène expansé ou extrudé revêtue sur au moins une de ses faces d'une couche de contreplaqué adhérisé sur ladite âme en polystyrène, l'épaisseur de la ou des couches de contreplaqué étant comprise entre environ 2 et 10 % et de préférence étant égale à environ 5 % de l'épaisseur de l'âme en polystyrène, l'on réalise une pluralité de découpes (11; 23; 33; 43; 53) à partir d'une surface dudit élément jusqu'au voisinage de la couche de contreplaqué (13; 21; 31; 41) qui se trouve sur la surface opposée, que l'on communique audit élément la forme désirée en le déformant de manière à réduire le volume desdites découpes, après quoi on immobilise ledit élément dans la configuration choisie, à l'aide d'une colle à un ou plusieurs composants qui rétablit la continuité de la couche de contreplaqué (12, 20, 30, 40) située sur la surface à partir de laquelle on a réalisé les découpes, ou que l'on applique sur ladite surface une couche continue de contreplaqué qui est collée soit sur l'âme en polystyrène, soit sur la couche en contreplaqué qui était précédemment collée sur l'âme en polystyrène et dans laquelle on a réalisé les découpes.

2. Procédé selon la revendication 1, caractérisé par le fait que la colle est une colle à base de polyuréthane.

3. Procédé selon l'une quelconque des revendications 1 à 2, caractérisé par le fait que les découpes présentent une section en forme de V (23) se rétrécissant en direction de la face opposée (21).

4. Procédé selon l'une quelconque des revendications 1 à 3, caractérisé par le fait que les découpes sont perpendiculaires au chant de l'élément.

5. Procédé selon l'une quelconque des revendications 1 à 3, caractérisé par le fait que les découpes sont inclinées en biais par rapport au chant de l'élément.

6. Procédé selon l'une quelconque des revendications 1 à 3, caractérisé par le fait qu'il comporte un réseau de découpes croisées de préférence ondulées.

7. Procédé de fabrication d'éléments composites développables destinés à la réalisation de structures tridimensionnelles, caractérisé par le fait que l'on applique l'un contre l'autre deux éléments composites constitués par une âme (3a, 3b) en mousse de polystyrène expansé ou extrudé revêtue sur une de ses faces principales d'une couche de contreplaqué (1, 2) adhérisé sur ladite âme, que l'on applique une colle structurale à un ou plusieurs composants sur les surfaces de l'âme non revêtues de contreplaqué AL/JD/AA - CDE 69865 et que l'on met en contact les deux âmes en polystyrène des deux éléments en les conformant selon une forme développable.

8. Procédé de fabrication de structures tridimensionnelles à l'aide d'éléments fabriqués selon l'une quelconque des revendications précédentes, caractérisé par le fait que l'on réalise dans un premier élément, à partir d'une face principale (50) jusqu'au niveau de la face opposée (52) deux découpes parallèles (53) dont la largeur correspond à l'épaisseur des parois de contreplaqué (60, 61) d'un second élément destiné à être assemblé au premier et dont l'écartement correspond à l'épaisseur de l'âme (62) dudit second élément, que l'on retire l'âme de polystyrène du second élément sur une hauteur correspondant à la hauteur de découpe dans le premier élément, puis qu'on encastre les extrémités des faces externes du second élément assemblées dans les découpes du premier élément, le collage des éléments en position assemblée étant assuré par la mise en place d'une colle structurale dans lesdites découpes.

9. Procédé de fabrication de structures tridimensionnelles à l'aide d'éléments fabriqués selon l'une quelconque des revendications 1 à 7, caractérisé par le fait que pour réunir bord à bord deux éléments, on utilise des organes de liaison (72, 73,74) encastrés dans l'âme (3) de chacun des éléments, organes qui viennent au contact des couches de contreplaqué des deux éléments à réunir, la fixation de l'ensemble étant réalisée par exemple par clouage ou par collage.

10. Procédé selon la revendication 9, caractérisé par le fait que la fixation des éléments est assurée par des agrafes traversant une bande auto-collante de préférence de nature fibreuse, de manière à permettre la défixation des éléments par simple décollement de ladite bande.

11. Elément composite développable pour la mise en oeuvre du procédé selon l'une quelconque des revendications précédentes, caractérisé par le fait qu'il comprend une âme en mousse de polystyrène (3; 4; 22; 32; 42; 52; 62) sur laquelle sont adhérisées des couches externes en contreplaqué (1-2; 10; 20; 21; 30-31; 40-41; 50-51; 60-61) dont l'épaisseur est comprise entre environ 2 et 10 % et de préférence égale à environ 5 % de l'épaisseur de ladite âme en polystyrène.

AL/JD/AA - CDE 69865

*Fig:1*

*Fig:2*

*Fig:3*

*Fig:4*

0164280

2/5

**Fig:5**

23

20

22

21

**Fig:6**

21

20

22

**Fig:7**

33

30

**Fig:8**

31

32

30

31

0164280

3/5

Fig:9

Fig:10

43

40

41  42

Fig:11

Fig:14

60

61
62

53    53

50

51    52

43

40

41  42

Fig:15

62   61

60

53    53

50

52

51

*Fig.12*

*Fig.13*

*Fig:16*

*Fig:17*